# EUROPEAN PATENT APPLICATION

(11) **EP 4 391 120 A1**
(43) Date of publication of application: **26.06.2024**
(21) Application number: 22937658.7
(22) Date of filing: 28.10.2022
(51) Int. Cl.: H01M 4/70, H01M 4/64, H01M 4/13, H01M 10/0587

(54) **CURRENT COLLECTOR, ELECTRODE SHEET AND MANUFACTURING METHOD THEREFOR, ELECTRODE ASSEMBLY, AND SECONDARY BATTERY**

(71) Applicant: Contemporary Amperex Technology Co., Limited, Ningde,Fujian 352100 (CN)
(72) Inventor: LIU, Zhi, Ningde, Fujian 352100 (CN); SHI, Dongyang, Ningde, Fujian 352100 (CN); LV, Ruijing, Ningde, Fujian 352100 (CN); DENG, Yaqian, Ningde, Fujian 352100 (CN); WANG, Yuzhen, Ningde, Fujian 352100 (CN); JIN, Haizu, Ningde, Fujian 352100 (CN); LI, Baiqing, Ningde, Fujian 352100 (CN)
(74) Representative: Herrmann, Uwe
(86) International application number: PCT/CN2022/128367
(87) International publication number: WO 2024/087200

(57) **Abstract**

The present application relates to a current collector, an electrode plate and a preparation method thereof, an electrode assembly, and a secondary battery. Through holes running through a current collecting body are provided in at least one corner region, so that the electrode assembly formed by winding electrode plates provided with the current collectors may feature the through holes in at least one layer of electrode plate in a bent portion. In this case, during cyclic charging, lithium ions on a convex side and a concave side of the electrode plate may communicate through the through holes, thereby ensuring that intercalated lithium concentrations on two sides of the electrode plate are balanced, reducing the risk of lithium precipitation between the negative electrode plate and the positive electrode plate in the bent portion, and prolonging the service life of the secondary battery.

## Description

### TECHNICAL FIELD

The present application relates to the technical field of batteries, and in particular, to a current collector, an electrode plate and a preparation method thereof, an electrode assembly, and a secondary battery.

### BACKGROUND

An electrode assembly is a component for electrochemical reaction in a secondary battery. The electrode assembly is mainly formed by winding or stacking a positive electrode plate and a negative electrode plate, and a separator arranged between the positive electrode plate and the negative electrode plate. During winding, the electrode assembly can form a flat and straight portion and two bent portions located on two sides of the flat and straight portion.

In a bending region, negative electrode plates and positive electrode plates are sequentially alternately stacked. However, due to structural design defects of the electrode assembly, lithium precipitation is likely to occur between a negative electrode plate and a positive electrode plate during cyclic charging and discharging, which seriously affects the service life of the secondary battery.

### SUMMARY

In this regard, it is necessary to provide a current collector, an electrode plate and a preparation method thereof, an electrode assembly, and a secondary battery, to reduce the risk of lithium precipitation and prolong the service life of the secondary battery.

In a first aspect, the present application provides a current collector for winding in a first direction. The current collector includes a current collecting body provided with a plurality of corner regions spaced in the first direction, the corner regions each being configured to be opposite to a bent portion of an electrode assembly, where through holes run through at least one corner region in a thickness direction of the current collector.

In the above-mentioned current collector, the through holes running through the current collecting body are provided in the at least one corner region, so that the electrode assembly formed by winding the electrode plate with the current collector may feature the through holes in at least one layer of electrode plate in the bent portion. In this case, during cyclic charging, lithium ions on a convex side and a concave side of the electrode plate may communicate through the through holes, thereby ensuring that intercalated lithium concentrations on two sides of the electrode plate are balanced, reducing the risk of lithium precipitation between the negative electrode plate and the positive electrode plate in the bent portion, and prolonging the service life of the secondary battery.

In some embodiments, in the corner region provided with the through holes, a plurality of through holes are provided, and all the through holes are spaced in the corner region. In this way, lithium ions can quickly pass through two sides of the electrode plate and the lithium ion concentrations on the two sides of the electrode plate can be dynamically balanced.

In some embodiments, in the corner region provided with the through holes, the through holes are spaced in rows in a second direction, a sum of opening areas of any row of through holes is denoted as S0, a smaller S0 of opening areas of a row of through holes indicates that the row of the through holes are closer to an end of the corner region in the second direction, and the first direction is perpendicular to the second direction. In this way, the openings close to the end of the corner region are reduced, and stress concentration caused by too many openings is avoided, thereby effectively avoiding the risk of fracturing of the electrode plate during cold pressing.

In some embodiments, in the corner region provided with the through holes, a number of openings in each row of through holes gradually decreases from a middle of the corner region to an end of the corner region in the second direction. According to this design, the number of openings close to an end of the corner region is reduced, the structural strength on an edge of the current collecting body is ensured, and the risk of fracture during cold pressing is avoided.

In some embodiments, the current collecting body is provided with a coating region for being coated with an active material layer, the coating region extends in the first direction and passes through each of the corner regions, the through holes in the corner region are all located in the coating region in the second direction, and the first direction is perpendicular to the second direction. In this way, the opening positions of the through holes are all located in the coating region, so that effective circulation of lithium ions on two sides of the electrode plate is achieved. In addition, weakening of structural strength of a tab part caused by the arrangement of the through holes in the tab part is also avoided.

In some embodiments, at least one stress region is arranged in the coating region, the stress region extends along an edge of the coating region in the second direction, and the through holes in the corner region are all located in a region of the coating region other than the stress region in the second direction. In this way, the stress region is reserved close to the edge of the coating region without arranging the through holes, thereby ensuring the mechanical strength of at least one side of the current collector, avoiding fracture or tearing during processing, and improving production efficiency.

In some embodiments, a width of each stress region in the second direction is denoted as D, where D ≥ 3 mm. In this way, a minimum threshold of the width of the stress region is reasonably limited, so that no opening is performed in a region away from the edge of the coating region in the second direction, and the mechanical strength of at least one side of the current collector is ensured.

In some embodiments, two stress regions are spaced in the coating region in the second direction, and the two stress regions are respectively in adjacent connection with two opposite edges of the coating region in the second direction respectively. In this way, the stress regions are reserved close to the two opposite edges of the coating region without arranging the through holes, thereby ensuring the mechanical strength of the two sides of the current collector, avoiding fracture or tearing during processing, and improving production efficiency.

In some embodiments, the current collecting body is further provided with a blank region, and the blank region is located on at least one side of the coating region in the second direction. In this way, the blank region is reserved on at least one side of the current collecting body, so as to manufacture the tab part required by the electrode assembly, which improves the manufacturing efficiency.

In some embodiments, in the corner region provided with the through holes, a sum of opening areas of all the through holes is denoted as S 1, and an area of the corner region in the current collecting body is denoted as S2, where 0.1% ≤ S1/S2 ≤ 50%. In this way, the ratio range of S1/S2 is reasonably controlled, so that it can be ensured that lithium ions circulate smoothly on two sides of the electrode plate, and it can also be ensured that the current collecting body has certain structural strength, thereby avoiding the risk of strip breakage.

In some embodiments, first n corner regions are all provided with the through holes from a winding starting end of the current collecting body, where n ≤ 6. In this way, opening is performed in the first n corner regions, so that targeted improvement can be performed at the positions where the electrode assembly is subjected to lithium precipitation, and the opening operation is reduced while the lithium precipitation is reduced, thereby improving the mechanical strength of the current collector.

In a second aspect, the present application provides an electrode plate, including: the current collector according to any one of the above; and an active material layer arranged on at least one surface of a current collecting body.

In a third aspect, the present application provides a method for preparing an electrode plate, which is used to prepare the above-mentioned electrode plate, including the following steps: providing a current collecting body; providing through holes in each corner region of the current collecting body to form a current collector; coating a surface of the current collector with an active material layer; and rolling the coated current collector.

In some embodiments, the step of rolling the coated current collector includes: pressing a tension roller surface of a pressure roller and extension roller surfaces located on two sides of the tension roller surface respectively on the active material layer and blank regions of the current collector that are located on two sides of the active material layer, and controlling a distance to be reserved between a side of the extension roller surface facing the tension roller surface and a region where the through holes are located. In this way, when an active material is cold-pressed, the distance is controlled to be reserved between the side of the extension roller surface and the region where the through holes are located, so as to avoid stress concentration caused by the opening positions of the through holes being next to the extension roller surface, thereby preventing the electrode plate from being easily subjected to strip breakage during rolling.

In a fourth aspect, the present application provides an electrode assembly configured as a wound structure, including a positive electrode plate, a negative electrode plate, and a separator spaced between the positive electrode plate and the negative electrode plate, the wound structure including a bent portion, where the positive electrode plate and/or the negative electrode plate are/is the above-mentioned electrode plate(s), and the bent portion is opposite to a corner region in position after winding.

In a fifth aspect, the present application provides a secondary battery, including the above-mentioned electrode assembly.

The above description is merely a summary of the technical solutions of the present application. In order to allow the technical means of the present application to be understood clearly and implemented in accordance with the content of the specification and allow the above and other objectives, features, and advantages of the present application to be more obviously and easily understood, specific implementations of the present application are described below.

### BRIEF DESCRIPTION OF THE DRAWINGS

By reading the detailed description of the following preferred implementations, various other advantages and benefits will become apparent to those of ordinary skill in the art. The accompanying drawings are provided merely to illustrate the preferred implementations, rather than to limit the present application. In addition, in the accompanying drawings, the same reference numerals represent the same components. In the accompanying drawings:
FIG. 1 is a schematic exploded structural diagram of a secondary battery according to some embodiments of the present application;
FIG. 2 is a schematic structural diagram of an electrode assembly according to some embodiments of the present application;
FIG. 3 is a schematic structural diagram of a current collector according to some embodiments of the present application;
FIG. 4 is a first schematic flowchart of a method for preparing an electrode plate according to some embodiments of the present application;
FIG. 5 is a second schematic flowchart of a method for preparing an electrode plate according to some embodiments of the present application; and
FIG. 6 is a schematic structural diagram of a pressure roller according to some embodiments of the present application.

Reference numerals: 100. Secondary battery; 10. Electrode assembly; 20. End cap; 30. Electrode terminal; 40. Shell; 1. Electrode plate; 1a. Current collector; 11. Current collecting body; 12. Through hole; 13. Corner region; 14. Coating region; 15. Stress region; 16. Blank region; 17. Opening region; 18. Flat and straight region; 2. Positive electrode plate; 3. Negative electrode plate; 4. Separator; 5. Flat and straight portion; 6. Bent portion; 200. Pressure roller; 210. Extension roller surface; 220. Tension roller surface; X. First direction; Y Second direction.

### DETAILED DESCRIPTION OF THE EMBODIMENTS

Embodiments of the technical solutions of the present application will be described in detail below with reference to the accompanying drawings. The following embodiments are used merely to clearly illustrate the technical solutions of the present application. Therefore, these embodiments are merely exemplary and are not intended to limit the protection scope of the present application.

Unless otherwise defined, all technical and scientific terms used herein have the same meanings as commonly understood by those skilled in the art of the present application. The terms used herein are merely intended to describe the specific embodiments, rather than limit the present application. The terms "include" and "have" in the specification, claims, and accompanying drawings of the present application and any variations thereof are intended to encompass without excluding other content.

In the description of the embodiments of the present application, the technical terms such as "first" and "second" are used merely to distinguish different objects, and cannot be understood as indicating or implying relative importance or implicitly indicating a number, a specific order, or a primary/secondary relationship of the indicated technical features. In the description of the embodiments of the present application, "a plurality of" means two or more, unless otherwise specifically defined.

The term "embodiment" mentioned herein means that a specific feature, structure, or characteristic described in combination with the embodiment may be included in at least one embodiment of the present application. The term appearing in different parts of the specification does not necessarily refer to the same embodiment or an independent or alternative embodiment exclusive of other embodiments. It may be explicitly or implicitly appreciated by those skilled in the art that the embodiments described herein may be combined with other embodiments.

In the description of the embodiments of the present application, the term "and/or" merely describes associations between associated objects, and it indicates three types of relationships. For example, A and/or B may indicate that A exists alone, A and B exist at the same time, or B exists alone. In addition, the character "/" herein generally indicates that the associated objects are in an "or" relationship.

In the description of the embodiments of the present application, the term "a plurality of" refers to two or more, and similarly, "a plurality of groups" refers to two or more groups and "a plurality of pieces" refers to two or more pieces.

In the description of the embodiments of the present application, the technical terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial direction", "radial direction" and "circumferential direction" are orientations or positional relationships shown based on the accompanying drawings. These terms are merely intended to facilitate description of the embodiments of the present application and make the description simple, rather than to indicate or imply that an apparatus or element referred to must have a specific orientation or be constructed and operated in the specific orientation. Therefore, these terms cannot be construed as a limitation to the embodiments of the present application.

In the description of the embodiments of the present application, unless otherwise clearly specified and defined, the technical terms such as "mount", "connected", "connection" and "fix" should be understood in a broad sense. For example, the "connection" may be a fixed connection, removable connection or integral connection; may be a mechanical connection or electrical connection; and may be a direct connection or indirect connection by means of an intermediate medium, or may be internal communication between two elements or an interaction relationship between two elements. Those of ordinary skill in the art may understand specific meanings of the above terms in the embodiments of the present application based on a specific situation.

At present, with the development of the market, the application of power batteries is becoming increasingly widespread. The power batteries are not only applied to energy storage power systems such as hydraulic power, thermal power, wind power and solar power stations, but also widely used in electric transportation, such as electric bicycles, electric motorcycles, and electric vehicles, and various fields, such as military equipment, and aerospace. With the continuous expansion of the power battery application field, the market demand for power batteries is also constantly growing.

The applicant has noticed that when an electrode assembly is configured as a wound structure, the electrode assembly includes a flat and straight portion and bent portions arranged on two sides of the flat and straight portion. In the bent portion, there are alternating multilayer positive electrode plates and negative electrode plates with different curvature radii, and the positive electrode plates and the negative electrode plates may all form concave surfaces and convex surfaces during bending. Taking one layer of negative electrode plate as an example (certainly, one layer of positive electrode plate may also be taken as an example), a concave side and a convex side of the negative electrode plate correspond to an inner-layer positive electrode plate and an outer-layer positive electrode plate respectively, that is, the concave side of the negative electrode plate is opposite to the convex surface of the inner-layer positive electrode plate, and the convex side of the negative electrode plate is opposite to the concave surface of the outer-layer positive electrode plate.

Since the curvature radius of the concave surface of the negative electrode plate is greater than that of the convex surface of the inner-layer positive electrode plate, the active material capacity of the concave surface of the negative electrode plate is greater than that of the convex surface of the positive electrode plate, and corresponding NP values of the negative electrode plate and the inner-layer positive electrode are greater than 1, that is, it can be simply understood as that a concentration of lithium intercalation vacancies is greater than a concentration of intercalated lithium ions, and the lithium intercalation vacancies remain. On the contrary, since the curvature radius of the concave surface of the negative electrode plate is less than that of the convex surface of the outer-layer positive electrode plate, the active material capacity of the concave surface of the negative electrode plate is less than that of the convex surface of the positive electrode plate, and corresponding NP values of the negative electrode plate and the outer-layer positive electrode are greater than 1, that is, it can also be simply understood as that the concentration of lithium intercalation vacancies cannot meet than intercalation of lithium ions, so that the risk of lithium precipitation is likely to occur during charging.

Based on this, to solve the problem that lithium precipitation is prone to occur between the positive electrode plate and the negative electrode plate at the bent portion of the electrode assembly, thereby affecting the service life of a secondary battery, the applicant has designed a current collector through in-depth research, where through holes run through at least one corner region in a thickness direction of the current collector, so that lithium ions on two sides of the current collector can circulate with each other.

In the above-mentioned current collector, the through holes running through the current collecting body are provided in the at least one corner region, so that an electrode plate prepared by using the current collector, such as a positive electrode plate or a negative electrode plate, may allow lithium ions on two sides of the electrode plate to pass through the through holes, so as to ensure that the lithium ion concentrations on the two sides of the electrode plate are balanced. For example, lithium ions flow from one side with a high lithium ion concentration to the other side with a low lithium ion concentration through the through holes.

After the electrode plate prepared by the current collector is wound to form the electrode assembly, the electrode assembly may feature the through holes in at least one layer of electrode plate in the bent portion. In this case, during cyclic charging, lithium ions on the convex side and the concave side of the electrode plate may communicate through the through holes, thereby ensuring that intercalated lithium concentrations on two sides of the electrode plate are balanced. For example, the lithium ions on the convex side of the negative electrode plate circulate to the lithium ions on the concave side of the negative electrode plate through the through holes, so that the intercalated lithium concentration on the convex side is reduced, and it is ensured that a local NP is greater than or equal to 1. The risk of lithium precipitation between the negative electrode plate and the positive electrode plate in the bent portion is reduced, and the service life of the secondary battery is prolonged.

The secondary battery disclosed in the embodiment of the present application can be used in, but not limited to, a power consumption apparatus such as a vehicle, a ship or an aircraft. A power system of the power consumption apparatus may be composed of the secondary battery and the like disclosed the present application.

In a battery system, there may be a plurality of secondary batteries, and the plurality of secondary batteries may be connected in series, in parallel, or in series and parallel. The parallel-series connection means that the plurality of secondary batteries are connected both in series and in parallel. The plurality of secondary batteries may be directly connected in series or in parallel or in series and parallel, and then a whole composed of the plurality of secondary batteries is accommodated in a case. Certainly, a battery may also be implemented in such a way that the plurality of secondary batteries may be first connected in series or in parallel or in series and parallel to form a battery module form, and then a plurality of battery modules are connected in series or in parallel or in series and parallel to form a whole, which is accommodated in the case. The battery may further include other structures. For example, the battery may further include a bus part configured to achieve electrical connection between the plurality of secondary batteries. The secondary battery may be in the shape of a cylinder, a flat body, a cuboid, or the like.

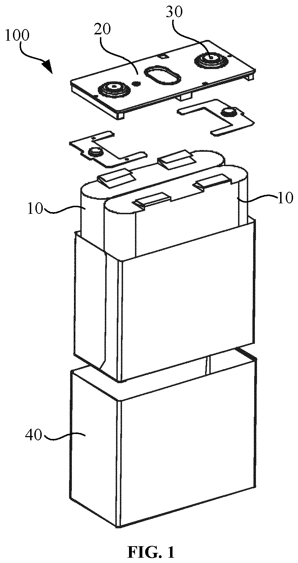

Referring to FIG. 1, FIG. 1 is a schematic exploded structural diagram of a secondary battery 100 according to some embodiments of the present application. The secondary battery 100 refers to a smallest unit that forms a battery. As shown in FIG. 1, the secondary battery 100 includes an end cap 20, a shell 40, an electrode assembly 10, and other functional components.

The end cap 20 refers to a component that covers an opening of the shell 40 to isolate an internal environment of the secondary battery 100 from an external environment. Without limitation, the shape of the end cap 20 may be adapted to the shape of the shell 40 so as to fit with the shell 40. Optionally, the end cap 20 may be made of a material (for example, an aluminum alloy) with certain hardness and strength, and thus the end cap 20 is not prone to deformation when subjected to squeezing or collision, so that the secondary battery 100 can have a higher structural strength, and the safety performance can also be improved. Functional components, such as an electrode terminal 30, may be provided on the end cap 20. The electrode terminal 30 may be configured to electrically connect to the electrode assembly 10 so as to output or input electric energy of the secondary battery 100. In some embodiments, the end cap 20 may be further provided with a pressure relief mechanism configured to release an internal pressure when an internal pressure or a temperature of the secondary battery 100 reaches a threshold. The end cap 20 may also be made of various materials, such as copper, iron, aluminum, stainless steel, an aluminum alloy and plastic, which is not particularly limited in the embodiments of the present application. In some embodiments, an insulation part may be further provided on an inner side of the end cap 20. The insulation part may be configured to isolate electrical connection components inside the shell 40 from the end cap 20 so as to reduce the risk of short circuiting. For example, the insulation part may be made of plastic, rubber, and the like.

The shell 40 is an assembly that is configured to fit with the end cap 20 so as to create the internal environment of the secondary battery 100, where the created internal environment may be configured to accommodate the electrode assembly 10, an electrolyte and other components. The shell 40 and the end cap 20 may be independent components, and the shell 40 may be provided with an opening, at which the end cap 20 covers the opening to create the internal environment of the secondary battery 100. Without limitation, the end cap 20 and the shell 40 may also be integrated. Specifically, the end cap 20 and the shell 40 may first form a common connection surface before other components are placed into the shell, and then the end cap 20 covers the shell 40 when the interior of the shell 40 needs to be packaged. The shell 40 may have various shapes and various sizes, for example, in the form of a cuboid, a cylinder, a hexagonal prism, etc. Specifically, the shape of the shell 40 may be determined depending on the specific shape and size of the electrode assembly 10. The shell 40 may be made of various materials, such as copper, iron, aluminum, stainless steel, an aluminum alloy, and plastic, which is not particularly limited in the embodiments of the present application.

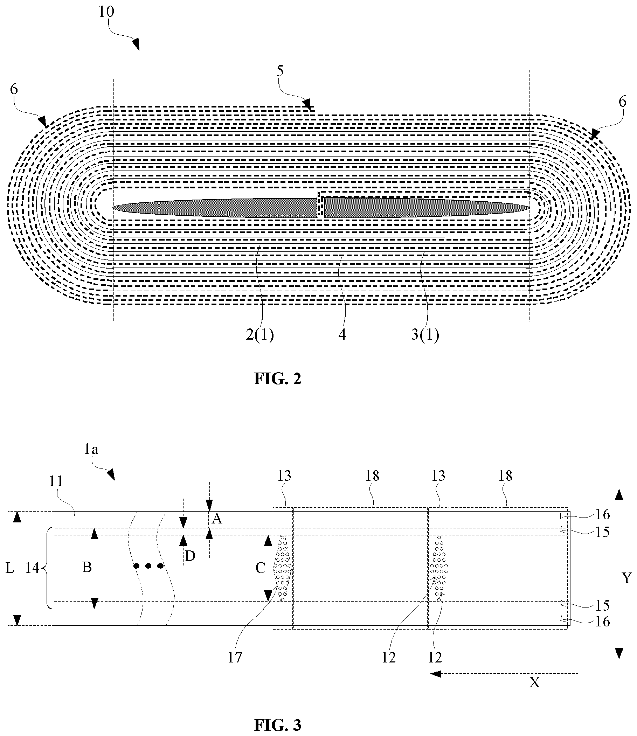

Referring to FIG. 2, the electrode assembly 10 is a component, where an electrochemical reaction occurs, in the secondary battery 100. The shell 40 may include one or more electrode assemblies 10 therein. The electrode assembly 10 is mainly formed by winding or stacking a positive electrode plate 2 and a negative electrode plate 3, and a separator 4 is usually arranged between the positive electrode plate 2 and the negative electrode plate 3. Parts of the positive electrode plate 2 and the negative electrode plate 3 that have an active material form a main body portion of the electrode assembly 10, and parts of the positive electrode plate 2 and the negative electrode plate 3 that have no active material each form a tab. The cathode tab and the anode tab may be together located at an end of the main body portion or respectively at two ends of the main body portion. During the charge-discharge process of the battery, a cathode active material and an anode active material react with the electrolyte, and the tabs are connected to the electrode terminal 30 to form a current loop.

According to some embodiments of the present application, referring to FIGS. 2 and 3, the present application provides a current collector 1a for winding in a first direction X. The current collector 1a includes a current collecting body 11. The current collecting body 11 is provided with a plurality of corner regions 13 spaced in the first direction X. The corner regions 13 each are configured to be opposite to a bent portion 6 of an electrode assembly 10. Through holes 12 run through at least one corner region 13 in a thickness direction of the current collector 1a.

The current collecting body 11 refers to a core structure mainly composed on the current collector 1a, and certainly, it can also be understood as a component of the current collector 1a other than features such as the through holes 12. The current collecting body 11 can not only bear an active material, but also collect and output a current generated by the electrode active material. The material of the current collecting body 11 may be selected based on the polarity of the electrode plate 1. For example, in the positive electrode plate 2, the material of the current collecting body 11 may be, but is not limited to, a metallic material such as aluminum and nickel, or a composite material such as a conductive resin, a titanium-nickel shape memory alloy and carbon-coated aluminum foil. In the positive electrode plate 2, the material of the current collecting body 11 may be, but is not limited to, a metallic material such as copper, or certainly, may be a composite material such as a conductive resin and a titanium-nickel shape memory alloy.

The corner region 13 refers to a region of the current collecting body 11 corresponding to a bent shape that may be formed on a plurality of partial sections when the current collecting body 11 is wound in the first direction X, during preparation of the electrode assembly 10. In addition, referring to FIG. 2, the electrode assembly 10 formed by winding may form a bent portion 6. The bent portion 6 includes a current collecting body 11 provided with a plurality of stacked corner regions 13, that is, the corner regions 13 each are configured to be opposite to the bent portion 6 of the electrode assembly 10, which can be understood as that the wound corner regions 13 each are at the same position as or overlap with the bent portion 6 of the electrode assembly 10.

The plurality of corner regions 13 are spaced in the first direction X on the current collecting body 11, and a flat and straight region 18 is reserved between two adjacent corner regions 13, and is opposite to a flat and straight portion 5 of the electrode assembly 10. In addition, after being wound, two adjacent corner regions 13 are located on different bent portions 6 of the electrode assembly 10 respectively. For ease of understanding, two bent portions 6 of the electrode assembly 10 may be defined as a left bent portion 6 and a right bent portion 6 respectively. During winding, the first corner region 13 is wound around the left bent portion 6, and the second corner region 13 is wound around the right bent portion 6; then the third corner region 13 is wound around the left bent portion 6, and the fourth corner region 13 is wound around the right bent portion 6, and so on. Based on this logic, the remaining corner regions 13 are correspondingly wound around different bent portions 6 respectively.

Only some of all the corner regions 13 on the current collecting body 11 may be provided with through holes 12, or all the corner regions 13 may be provided with through holes 12.

The through holes 12 need to run through the corner regions 13 in the thickness direction of the current collector 1a, so as to ensure that the formed electrode plate 1 internally has a channel for lithium ions to pass through. There are various designs for the number and shape of the through holes 12. For example, there may be one or more through holes 12 in the corner region 13; the shape of each through hole 12 in the corner region 13 may be, but is not limited to, a regular shape such as a circle, a triangle, a square, a pentagon, and an ellipse; or certainly, may be designed into an irregular shape, and the like.

The through holes 12 running through the current collecting body 11 are provided in at least one corner region 13, so that the electrode assembly 10 formed by winding the electrode plate 1 with the current collector 1a may feature the through holes 12 in at least one layer of electrode plate 1 in the bent portion 6. In this case, during cyclic charging, lithium ions on a convex side and a concave side of the electrode plate 1 may communicate through the through holes 12, thereby ensuring that intercalated lithium concentrations on two sides of the electrode plate 1 are balanced, reducing the risk of lithium precipitation between the negative electrode plate 3 and the positive electrode plate 2 in the bent portion 6, and prolonging the service life of the secondary battery 100.

According to some embodiments of the present application, referring to FIG. 3, in the corner region 13 provided with the through holes 12, a plurality of through holes 12 are provided, and all the through holes 12 are spaced in the corner region 13.

In the same corner region 13, a plurality of through holes 12 are spaced in many ways. For example, the plurality of through holes 12 may be arranged as a matrix, concentric rings, and the like in the corner region 13, or may be irregularly and densely arranged.

The plurality of through holes 12 are spaced in the corner region 13, thereby improving a passing rate of lithium ions on two sides of the electrode plate 1 and improving dynamic balance of lithium ion concentrations on the two sides of the electrode plate 1.

According to some embodiments of the present application, referring to FIG. 3, in the corner region 13 provided with the through holes 12, the through holes 12 are spaced in rows in a second direction Y, a sum of opening areas of any row of through holes 12 is denoted as S0, a smaller S0 of opening areas of a row of through holes indicates that the row of the through holes are closer to an end of the corner region 13 in the second direction Y, and the first direction X is perpendicular to the second direction Y

The through holes 12 are spaced in rows in the corner region 13, which should be understood as that a plurality of through holes 12 are linearly spaced in rows in the first direction X, and the rows are spaced in the second direction Y In the same row, the opening areas of the through holes 12 may be kept the same or different.

The sum S0 of the opening areas is related to a number of through holes 12 in each row and the opening area of each single through hole 12. The opening areas of the single through holes 12 between rows may be kept the same or different. In addition, numbers of through holes 12 between rows may also be kept the same or different, but it should be noted that these two parameters cannot be both kept the same.

A smaller sum of opening areas of a row of through holes indicates that the row of the through holes are closer to an end of the corner region 13 in the second direction Y According to this design, the corner region 13 has large through holes 12 in the middle and small through holes 12 in two ends. In some embodiments, the sum S0 of opening areas of each row of through holes 12 gradually decreases from the middle of the corner region 13 to an end of the corner region 13 in the second direction Y In addition, the first direction X may be a length direction of the current collecting body 11, and the second direction Y may be a width direction of the current collecting body 11.

According to this design, the openings close to an end of the corner region 13 are reduced, and stress concentration caused by too many openings is avoided, thereby effectively avoiding the risk of fracturing of the electrode plate 1 during cold pressing.

According to some embodiments of the present application, referring to FIG. 3, in the corner region 13 provided with the through holes 12, a number of openings in each row of through holes 12 gradually decreases from a middle of the corner region 13 to an end of the corner region 13 in the second direction Y

During the opening process, the number of through holes 12 at an end of the corner region 13 in the second direction Y may be designed to be zero, that is, no opening is performed at an end of the corner region 13. In this case, a non-opening region 17 is reserved between the through hole 12 close to an end of the corner region 13 and the end of the corner region 13.

The opening areas of single through holes 12 between rows may be kept the same or different. When the opening areas of the single through holes 12 between rows are different, it is needed to ensure that the sum S0 of the opening areas of each row is smaller when it is closer to an end of the corner region 13.

The middle of the corner region 13 should be understood as a position in the middle of the corner region 13 in the second direction Y, or a position in the middle of the current collecting body 11 in its own width direction.

According to this design, the number of openings close to an end of the corner region 13 is reduced, the structural strength on an edge of the current collecting body 11 is ensured, and the risk of fracture during cold pressing is avoided.

According to some embodiments of the present application, referring to FIG. 3, the current collecting body 11 is provided with a coating region 14 for being coated with an active material layer. The coating region 14 extends in the first direction X and passes through each corner region 13, the through holes 12 in the corner region 13 are all located in the coating region 14 in the second direction Y, and the first direction X is perpendicular to the second direction Y

The coating region 14 refers to a region of the current collecting body 11 that can be coated with an active material. The coating region 14 in distribution on the current collecting body 11 may have an overlapping part with each corner region 13 or directly cover each corner region 13. When the coating region 14 covers each corner region 13, it means that the coating region 14 has the same width in the second direction Y as the current collecting body 11, that is, an entire surface of the current collecting body 11 is coated with an active material. In this case, for processing of a tab part, the current collector 1a may be cut in an earlier stage process to obtain a strip-shaped tab; or a strip-shaped tab is welded to the current collector 1a.

The through holes 12 in the corner region 13 are all located in the coating region 14 in the second direction Y, which should be understood as that the through holes 12 in the corner region 13 do not extend beyond an edge of the coating region 14 in the second direction Y It should be noted that if opening is performed beyond the coating region 14, it means that there are also through holes 12 in a partial region not coated with the active material layer, and this partial region is usually regarded as the tab part in the electrode assembly 10. Therefore, opening in this partial region will not only fail to achieve effective circulation of lithium ions, but also weaken the structural strength of the tab part.

The opening positions of the through holes 12 are limited to the coating region 14, so that effective circulation of lithium ions on two sides of the electrode plate 1 is achieved. In addition, weakening of structural strength of the tab part caused by the arrangement of the through holes 12 in the tab part is also avoided.

According to some embodiments of the present application, referring to FIG. 3, at least one stress region 15 is arranged in the coating region 14, the stress region 15 extends along an edge of the coating region 14 in the second direction Y, and the through holes 12 in the corner region 13 are all located in a region of the coating region 14 other than the stress region 15 in the second direction Y

The through holes 12 in the corner region 13 are all located in the region of the coating region 14 other than the stress region 15, that is, in the second direction Y, a non-opening region 17 is provided between the through holes 12 and an edge of the coating region 14. Because stress concentration occurs at the edge of the coating region 14 during cold rolling of the electrode plate 1, if opening is performed close to the edge of the coating region 14, a weak point may be formed, which may lead to the fracture of the current collector 1a or the electrode plate 1, thereby leading to the scrapping of the electrode plate 1, reducing production efficiency and increasing costs. Therefore, an opening region 17 on the current collector 1a avoids the stress region 15. This can ensure the mechanical strength of at least one side of the current collector 1a, avoid fracture or tearing during processing, and improve production efficiency.

The opening region 17 can be understood as a region enclosed by all the through holes 12 in the corner region 13.

The stress region 15 is reserved close to the edge of the coating region 14 without arranging the through holes 12, thereby ensuring the mechanical strength of at least one side of the current collector 1a, avoiding fracture or tearing during processing, and improving production efficiency.

According to some embodiments of the present application, referring to FIG. 3, a width of each stress region 15 in the second direction Y is denoted as D, where D ≥ 3 mm.

The width D of the stress region 15 may be a value greater than 3 mm. Certainly, a specific value of the width D of the stress region 15 may also depend on the overall width of the current collector 1a.

A minimum threshold of the width of the stress region 15 is reasonably limited, so that no opening is performed in a region away from the edge of the coating region 14 in the second direction Y, and the mechanical strength of at least one side of the current collector 1a is ensured.

According to some embodiments of the present application, referring to FIG. 3, two stress regions 15 are spaced in the coating region 14 in the second direction Y, and the two stress regions 15 are respectively in adjacent connection with two opposite edges of the coating region 14 in the second direction Y respectively.

The two stress regions 15 are spaced in the coating region 14 in the second direction Y In this case, the positions of the through holes 12 in the corner region 13 should be between the two stress regions 15.

The stress regions 15 are reserved close to the two opposite edges of the coating region 14 without arranging the through holes 12, thereby ensuring the mechanical strength of the two sides of the current collector 1a, avoiding fracture or tearing during processing, and improving production efficiency.

According to some embodiments of the present application, the current collecting body 11 is further provided with a blank region 16. The blank region 16 is located on at least one side of the coating region 14 in the second direction Y

The blank region 16 refers to a region of the current collecting body 11 other than the coating region 14, that is, a region that is not coated with the active material layer, where no opening is performed. This part can be used as a tab part in the manufacture of the electrode assembly 10. For example, the blank region 16 is wound to form a full tab structure, and the like.

There may be one or two blank regions 16. When there are two blank regions 16, the two blank regions 16 are located on two opposite sides of the coating region 14 in the second direction Y In some embodiments, an opening region 17 is formed at a position where through holes 12 in the same corner region 13 are located, and there is a stress region 15 between the opening region 17 and the blank region 16. To facilitate understanding of the width relationship between the regions, the width of the opening region 17 in the second direction Y is denoted as C, the width of the coating region 14 is denoted as B, the width of the blank region 16 is denoted as A, and the width of the current collecting body 11 is denoted as L. In this case, the width of the opening region 17 satisfies the condition that C ≤ B = L - n × A, where n may be 0, 1 or 2. It should be noted that the width of the opening region 17 can be reversed in later confirmation by using the following method, for example, through holes 12 located on the outermost two sides in the second direction Y in the corner region 13 are taken, lines parallel to the first direction X are taken as tangents of the two through holes 12 respectively, and a maximum distance between the two tangents is obtained as the width C of the opening region 17.

The blank region 16 is reserved on at least one side of the current collecting body 11, so as to manufacture the tab part required by the electrode assembly 10, which improves the manufacturing efficiency.

According to some embodiments of the present application, in the corner region 13 provided with the through holes 12, a sum of opening areas of all the through holes 12 is denoted as S1, and an area of the corner region 13 in the current collecting body 11 is denoted as S2, where 0.1% ≤ S1/S2 ≤ 50%.

The corner region 13 with the through holes 12 should be understood as one of corner regions 13 with through holes 12, not all corner regions 13 with through holes 12.

S1/S2 may be valued in the range of 0.1%-50%, for example, S1/S2 may be, but is not limited to, 0.1% and 50%. It should be noted that the ratio of S1/S2 should not be too large. If the ratio of S1/S2 is greater than 50%, the structural strength at the corner region 13 is prone to be weakened, which easily leads to the risk of strip breakage during cold pressing.

The ratio range of S1/S2 is reasonably controlled, so that it can be ensured that lithium ions circulate smoothly on two sides of the electrode plate 1, and it can also be ensured that the current collecting body 11 has certain structural strength, thereby avoiding the risk of strip breakage.

According to some embodiments of the present application, first n corner regions 13 are all provided with the through holes 12 from a winding starting end of the current collecting body 11, where n ≤ 6.

The winding starting end of the current collecting body 11 means that an end that starts winding first when the current collecting body 11 is wound in the first direction X.

The first n corner regions 13 are the first to n^{th} corner regions 13 as counted from the starting end of the current collecting body 11. n is a positive integer, and may be, for example, 1, 2, 3, 4, 5, or 6.

It is found through the in-depth study of the applicant that during cyclic charging and discharging of the secondary battery 100, lithium precipitation is most likely to occur mainly at the innermost ring to the third ring of the electrode assembly 10, that is, the corresponding first six corner regions 13 of the current collecting body 11. Therefore, in the present application, opening is performed in the first n corner regions 13 to effectively solve the problem of lithium precipitation of the electrode assembly 10.

Opening is performed in the first n corner regions 13, so that targeted improvement can be performed at the positions where the electrode assembly 10 is subjected to lithium precipitation, and the opening operation is reduced while the lithium precipitation is reduced, thereby improving the mechanical strength of the current collector 1a.

According to some embodiments of the present application, the present application provides an electrode plate 1. The electrode plate 1 includes an active material layer and the current collector 1a according to any one of the above-mentioned solutions. The active material layer is arranged on at least one surface of the current collecting body 11.

The active material layer refers to an active material coating the current collector 1a, and a material of the active material layer may be selected based on the polarity of the electrode plate 1. For example, in the positive electrode plate 2, the material of the active material layer may be, but is not limited to, lithium cobaltate, lithium manganate, lithium nickelate, lithium iron phosphate, and a ternary material. In the negative electrode plate 3, the material of the active material layer may be, but is not limited to, graphite and a silicon oxide. The active material layer may be coated only on a side of the current collector 1a, or on two opposite sides of the current collector 1a.

For the above-mentioned electrode plate 1, by using the above-mentioned current collector 1a, during cyclic charging, lithium ions on a convex side and a concave side of the electrode plate 1 may communicate through the through holes 12, thereby ensuring that intercalated lithium concentrations on two sides of the electrode plate 1 are balanced, reducing the risk of lithium precipitation between the negative electrode plate 3 and the positive electrode plate 2 in the bent portion 6, and prolonging the service life of the secondary battery 100.

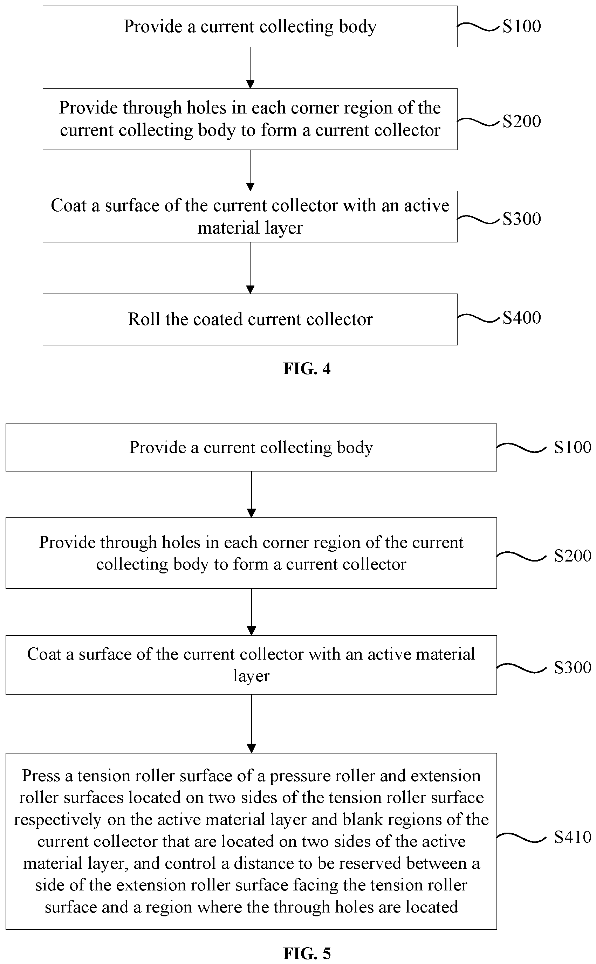

According to some embodiments of the present application, referring to FIGS. 3 and 4, the present application provides a method for preparing an electrode plate 1, which is used to prepare the above-mentioned electrode plate 1, including the following steps.

S100: Provide a current collecting body 11.

S200: Provide through holes 12 in each corner region 13 of the current collecting body 11 to form a current collector 1a.

S300: Coat a surface of the current collector 1a with an active material layer.

S400: Rolling the coated current collector 1a.

The current collecting body 11 in step S100 refers to a non-opening current collector 1a, such as aluminum foil and copper foil.

In step S200, there are many ways of opening in the corner region 13, such as laser opening, and mechanical cutting and punching.

In step S300, coating is a process of uniformly coating aluminum foil or copper foil with suspension slurry containing a cathode active material and an anode active material by a related device, and then drying to form a film. The specific coating process includes at least shear coating, wetting and leveling, drying, and other processes. The specific operations of these processes are not detailed herein, and reference may be directly made to existing literature.

In step S300, rolling is usually arranged after the coating and drying process, and is a process in which a coating powder electrode material on cathode and anode metal current collectors 1a is compacted by a roller press and the powder is rearranged and densified.

In the above-mentioned method for preparing an electrode plate 1, the through holes 12 are provided in the current collecting body 11, so that lithium ions on two sides of the electrode plate 1 can circulate with each other through the through holes 12. In this way, during cyclic charging, lithium ions on a convex side and a concave side of the electrode plate 1 may communicate through the through holes 12, thereby ensuring that intercalated lithium concentrations on two sides of the electrode plate 1 are balanced, reducing the risk of lithium precipitation between the negative electrode plate 3 and the positive electrode plate 2 in the bent portion 6, and prolonging the service life of the secondary battery 100.

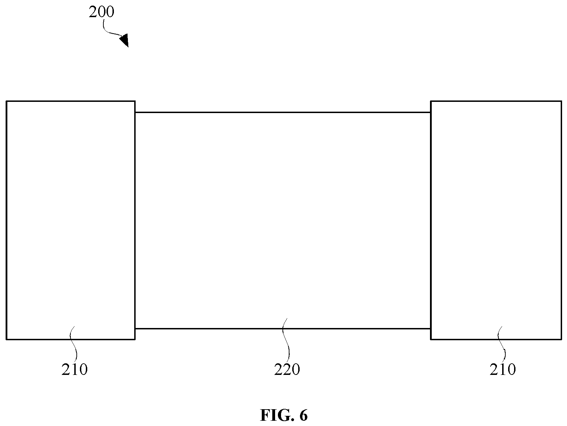

According to some embodiments of the present application, referring to FIGS. 5 and 6, step S400 of rolling the coated current collector 1a includes the following substeps.

S410: Press a tension roller surface 220 of a pressure roller 200 and extension roller surfaces 210 located on two sides of the tension roller surface 220 respectively on the active material layer and blank regions 16 of the current collector 1a that are located on two sides of the active material layer, and control a distance to be reserved between a side of the extension roller surface 210 facing the tension roller surface 220 and a region where the through holes 12 are located.

Referring to FIG. 6, the pressure roller 200 refers to a component that presses on the coated current collector 1a to compact the active material. A surface of the pressure roller 200 has a tension roller surface 220 and extension roller surfaces 210 located on two sides of the tension roller surface 220. The extension roller surface 210 is pressed in the blank region 16 of the current collector 1a, and the tension roller surface 220 is pressed on the active material layer of the current collector 1a. In addition, the extension roller surface 210 and the tension roller surface 220 extend circumferentially on the pressure roller 200, and the extension roller surface 210 has a diameter greater than that of the tension roller surface 220.

When the active material is cold-pressed, the distance is controlled to be reserved between the side of the extension roller surface 210 and the region where the through holes 12 are located, so as to avoid stress concentration caused by the opening positions of the through holes 12 being next to the extension roller surface 210, thereby preventing the electrode plate 1 from being easily subjected to strip breakage during rolling.

According to some embodiments of the present application, referring to FIG. 2, the present application provides an electrode assembly 10 that is configured as a wound structure. The electrode assembly 10 includes a positive electrode plate 2, a negative electrode plate 3, and a separator 4 spaced between the positive electrode plate 2 and the negative electrode plate 3, and the wound structure includes a bent portion 6. The positive electrode plate 2 and/or the negative electrode plate 3 are/is the above-mentioned electrode plate(s) 1, and the bent portion 6 is opposite to a corner region 13 in position after winding.

According to some embodiments of the present application, referring to FIG. 1, the present application provides a secondary battery 100, including the above-mentioned electrode assembly 10.

According to some embodiments of the present application, referring to FIGS. 1 to 6, the present application provides a current collector 1a. The position of the corner region 13 of the current collector 1a is confirmed based on a winding dimension of the electrode assembly 10, and then through holes 12 are provided in the corner region 13. The shapes and arrangement of the through holes 12 are not limited. A ratio of the opening area of all the through holes 12 to the area of the corner region 13 is 0.1%-50%. The width of the region where the through holes 12 are located in the second direction Y is limited to the coating region 14, and a sum of opening areas of each row gradually decreases from the middle to two sides. A blank region 16 is provided outside an edge of the coating region 14, and no opening is performed in the blank region 16 (a region not coated with an active material).

To make the objectives, technical solutions and advantages of the present application simpler and more understandable, the present application is illustrated by using the following specific embodiments, but the present application is by no means limited to these embodiments. The embodiments described below are only better embodiments of the present application, and can be used to describe the present application, but cannot be understood as limiting the scope of the present application. It should be noted that any modifications, equivalent substitutions, improvements, and the like made within the spirit and principle of the present application should fall within the protection scope of the present application.

To better describe the present application, the following will further describe the content of the present application with reference to embodiments. The following are specific embodiments.

### Comparative Example 1

### Positive electrode plate 2:

Cathode active material ternary material nickel-cobalt-manganese (NCM811), conductive agent acetylene black and binder polyvinylidene fluoride (PVDF) were evenly mixed based on a mass ratio of 97:2:1, and then added into solvent N-methylpyrrolidone (NMP) to prepare cathode slurry; and aluminum foil was evenly coated with the cathode slurry, dried at 85°C and then cold-pressed, and then die-cut and slit to prepare a positive electrode plate 2 of a lithium-ion battery.

The active material of the positive electrode plate 2 had a coating weight of 17.6 mg/cm², and a current collector 1a of the positive electrode plate 2 had a thickness of 13 µm.

### Negative electrode plate 3:

Anode active material graphite, conductive agent acetylene black, thickener carboxymethylcellulose sodium (CMC) and binder styrene-butadiene rubber (SBR) were added into solvent water based on a mass ratio of 96:2:1:1, and evenly mixed to prepare anode slurry; and copper foil was evenly coated with the anode slurry, dried at 85°C and then cold-pressed to prepare a negative electrode plate 3.

The negative electrode plate 3 had a coating weight of 10 mg/cm², a current collector 1a of the negative electrode plate 3 had a thickness of 8 µm, the current collector 1a had a width of 170 mm, and an active material coating region 14 of the negative electrode plate 3 had a width of 100 mm. In addition, no through holes 12 are provided in a corner region 13 of the current collector 1a of the negative electrode plate 3.

### Separator 4:

With a polyethylene microporous film used as a porous separator substrate, inorganic alumina powder, polyvinylpyrrolidone and an acetone solvent were evenly mixed based on a weight ratio of 3:1.5:5.5 to prepare slurry, and a side of the substrate was coated with the slurry and dried to obtain a separator.

### Electrolyte:

Lithium hexafluorophosphate was dissolved in a mixed solvent of ethylene carbonate, dimethyl carbonate and methyl ethyl carbonate (a volume ratio of the ethylene carbonate, the dimethyl carbonate and the methyl ethyl carbonate was 1:2:1) to obtain an electrolyte of the lithium-ion battery.

### Preparation of a secondary battery 100:

The above-mentioned positive electrode plate 2, negative electrode plate 3 and separator were wound to obtain a bare electrochemical cell, which underwent packaging, liquid injection, formation, exhaust and other processes to manufacture the lithium-ion battery. The design charge N/P of the battery was 1.03, and the design capacity of the electrochemical cell was 160 Ah.

### Comparative Example 2

This comparative example is substantially the same as Comparative Example 1 except only that openings were formed in first six corner regions 13 of the current collector 1a of the negative electrode plate 3, and a proportion of an opening area in an area of the corner regions 13 was 10%, and an opening region 17 had a width of 120 mm.

### Embodiment 1

This comparative example is substantially the same as Comparative Example 1 except only that openings were formed in first six corner regions 13 of the current collector 1a of the negative electrode plate 3, and a proportion of an opening area in an area of the corner regions 13 was 1%, and an opening region 17 had a width of 100 mm.

### Embodiment 2

This comparative example is substantially the same as Comparative Example 1 except only that openings were formed in first six corner regions 13 of the current collector 1a of the negative electrode plate 3, and a proportion of an opening area in an area of the corner regions 13 was 10%, and an opening region 17 had a width of 100 mm.

### Embodiment 3

This comparative example is substantially the same as Comparative Example 1 except only that openings were formed in first six corner regions 13 of the current collector 1a of the negative electrode plate 3, and a proportion of an opening area in an area of the corner regions 13 was 10%, and an opening region 17 had a width of 80 mm.

### Embodiment 4

This comparative example is substantially the same as Comparative Example 1 except only that openings were formed in first six corner regions 13 of the current collector 1a of the negative electrode plate 3, and a proportion of an opening area in an area of the corner regions 13 was 20%, and an opening region 17 had a width of 60 mm.

Secondary batteries 100 prepared in the above-mentioned comparative examples and embodiments were used, fracture frequencies during cold pressing were recorded. In addition, after the secondary battery 100 was manufactured, the secondary battery was charged to 4.25 V at a constant current and constant voltage with 0.5 C, and then the electrochemical cell was disassembled to observe whether lithium was precipitated at a bent portion 6 of an electrode assembly 10. For detailed results, reference may be made to Table 1.

**Table 1**

| Group | Proportion of opening areas in a corner region 13 | Width (mm) of an opening region 17 | Fracture frequency (times /10 km) of an electrode plate 1 during cold pressing | Does lithium precipitation occur at the bent portion 6? |
|---|---|---|---|---|
| Comparative Example 1 | No opening | / | 0 | Yes |
| Comparative Example 2 | 10% | 120 | 27 | No |
| Embodiment 1 | 1% | 100 | 15 | Yes |
| Embodiment 2 | 10% | 100 | 18 | No |
| Embodiment 3 | 10% | 80 | 2 | No |
| Embodiment 4 | 20% | 60 | 0 | No |

It can be seen from Table 1 that from the comparison between Embodiments 2 to 4 and Comparative Example 1, it can be concluded that providing the punching holes 12 in the corner region 13 of the current collector 1a can effectively reduce the problem of lithium precipitation at the bent portion 6.

In addition, from the comparison between Embodiments 1 and 2 and Comparative Example 1, it can be seen that if the width of the opening region 17 is the same as that of the active material coating region 14, the mechanical strength of the electrode plate 1 may be weakened, resulting in the electrode plate 1 being likely to fracture during cold pressing.

From the comparison between Embodiments 2, 3 and 4 and Comparative Example 2, it can be seen that if the width of the opening region 17 is less than the width of the active material coating region 14, a non-opening stress region 15 is reserved between the opening region 17 and an edge of the coating region 14, which can effectively reduce a number of fracture times of the electrode plate 1.

Finally, it should be noted that the above-mentioned embodiments are provided merely for describing the technical solutions of the present application, but not for limiting the present application. Although the present application is described in detail with reference to the above-mentioned embodiments, those of ordinary skill in the art should understand that they may still make modifications to the technical solutions described in the above-mentioned embodiments or make equivalent replacements to some or all technical features thereof; and these modifications or replacements do not make the essence of the corresponding technical solution depart from the scope of the technical solutions of the embodiments of the present application, and shall fall within the scope of claims and specification of the present application. In particular, provided that there is no structural conflict, the technical features in the embodiments may be combined in any way. The present application is not limited to the specific embodiments disclosed herein, but should include all technical solutions falling within the scope of the claims.

## Claims

1. A current collector (1a) for winding in a first direction (X), comprising:
a current collecting body (11) provided with a plurality of corner regions (13) spaced in the first direction (X), the corner regions (13) each being configured to be opposite to a bent portion (6) of an electrode assembly (10),
wherein through holes (12) run through at least one corner region (13) in a thickness direction of the current collector (1a).

2. The current collector (1a) according to claim 1, wherein in the corner region (13) provided with the through holes (12), a plurality of through holes 12 are provided, the through holes (12) are all spaced in the corner region (13).

3. The current collector (1a) according to claim 2, wherein in the corner region (13) provided with the through holes (12), the through holes (12) are spaced in rows in a second direction (Y), a sum of opening areas of any row of through holes (12) is denoted as S0, a smaller S0 of opening areas of a row of through holes (12) indicates that the row of the through holes (12) are closer to an end of the corner region (13) in the second direction (Y), and the first direction (X) is perpendicular to the second direction (Y).

4. The current collector (1a) according to claim 3, wherein in the corner region (13) provided with the through holes (12), a number of openings in each row of through holes (12) gradually decreases from a middle of the corner region (13) to an end of the corner region (13) in the second direction (Y).

5. The current collector (1a) according to claim 2, wherein the current collecting body (11) is provided with a coating region (14) for being coated with an active material layer, the coating region (14) extends in the first direction (X) and passes through each of the corner regions (13), the through holes (12) in the corner region (13) are all located in the coating region (14) in the second direction (Y), and the first direction (X) is perpendicular to the second direction (Y).

6. The current collector (1a) according to claim 5, wherein at least one stress region (15) is arranged in the coating region (14), the stress region (15) extends along an edge of the coating region (14) in the second direction (Y), and the through holes (12) in the corner region (13) are all located in a region of the coating region (14) other than the stress region (15) in the second direction (Y).

7. The current collector (1a) according to claim 6, wherein a width of each stress region (15) in the second direction (Y) is denoted as D, wherein D ≥ 3 mm.

8. The current collector (1a) according to claim 6, wherein two stress regions (15) are spaced in the coating region (14) in the second direction (Y), and the two stress regions (15) are respectively in adjacent connection with two opposite edges of the coating region (14) in the second direction (Y) respectively.

9. The current collector (1a) according to any one of claims 5 to 8, wherein the current collecting body (11) is further provided with a blank region (16), and the blank region (16) is located on at least one side of the coating region (14) in the second direction (Y).

10. The current collector (1a) according to any one of claims 1 to 9, wherein in the corner region (13) provided with the through holes (12), a sum of opening areas of all the through holes (12) is denoted as S1, and an area of the corner region (13) in the current collecting body (11) is denoted as S2, wherein 0.1% ≤ S1/S2 ≤ 50%.

11. The current collector (1a) according to any one of claims 1 to 10, wherein first n corner regions (13) are all provided with the through holes (12) from a winding starting end of the current collecting body (11), wherein n ≤ 6.

12. An electrode plate (1), comprising:
the current collector (1a) according to any one of claims 1 to 11; and
an active material layer arranged on at least one surface of the current collecting body (11).

13. A method for preparing an electrode plate, which is used to prepare the electrode plate (1) according to claim 12, and comprises the following steps:
providing a current collecting body (11);
providing through holes (12) in each corner region (13) of the current collecting body (11) to form a current collector (1a);
coating a surface of the current collector (1a) with an active material layer; and
rolling the coated current collector (1a).

14. The method for preparing an electrode plate according to claim 13, wherein the step of rolling the coated current collector (1a) comprises:
pressing a tension roller surface (220) of a pressure roller (200) and extension roller surfaces (210) located on two sides of the tension roller surface (220) respectively on the active material layer and blank regions (16) of the current collector (1a) that are located on two sides of the active material layer, and controlling a distance to be reserved between a side of the extension roller surface (210) facing the tension roller surface (220) and a region where the through holes (12) are located.

15. An electrode assembly (10) configured as a wound structure, comprising a positive electrode plate (2), a negative electrode plate (3), and a separator (4) spaced between the positive electrode plate (2) and the negative electrode plate (3), the wound structure comprising a bent portion (6), wherein
the positive electrode plate (2) and/or the negative electrode plate (3) are/is the electrode plate(s) (1) according to claim 12, and the bent portion (6) is opposite to a corner region (13) in position after winding.

16. A secondary battery (100), comprising the electrode assembly (10) according to claim 15.

## Amended claims

### Amended claims in accordance with Rule 137(2) EPC.

1. A current collector (1a) for winding in a first direction (X), comprising:
a current collecting body (11) provided with a plurality of corner regions (13) in the first direction (X), the corner regions (13) each being configured to be opposite to a bent portion (6) of an electrode assembly (10),
wherein through holes (12) run through at least one corner region (13) in a thickness direction of the current collector (1a).

2. The current collector (1a) according to claim 1, wherein in the corner region (13) provided with the through holes (12), a plurality of through holes (12) are provided, the through holes (12) are all spaced in the corner region (13).

3. The current collector (1a) according to claim 2, wherein in the corner region (13) provided with the through holes (12), if the through holes (12) are linearly arranged in spaced rows in the first direction (X), the rows are spaced in a second direction (Y), a sum of opening areas of any row of through holes (12) is denoted as S0, a smaller S0 of opening areas of a row of through holes (12) indicates that the row of the through holes (12) are closer to an end of the corner region (13) in the second direction (Y), and the first direction (X) is perpendicular to the second direction (Y).

4. The current collector (1a) according to claim 3, wherein in the corner region (13) provided with the through holes (12), a number of openings in each row of through holes (12) gradually decreases from a middle of the corner region (13) to an end of the corner region (13) in the second direction (Y).

5. The current collector (1a) according to claim 2, wherein the current collecting body (11) is provided with a coating region (14) for being coated with an active material layer, the coating region (14) extends in the first direction (X) and passes through each of the corner regions (13), the through holes (12) in the corner region (13) are all located in the coating region (14).

6. The current collector (1a) according to claim 5, wherein at least one stress region (15) is arranged in the coating region (14), the stress region (15) extends along an edge of the coating region (14) in the second direction (Y), and the through holes (12) in the corner region (13) are all located in a region of the coating region (14) other than the stress region (15), the first direction (X) being perpendicular to the second direction (Y).

7. The current collector (1a) according to claim 6, wherein two opposite edges of each stress region (15) in the second direction (Y) are spaced in the second direction (Y).

8. The current collector (1a) according to claim 7, wherein a width of each stress region (15) in the second direction (Y) is denoted as D, wherein D ≥ 3 mm.

9. The current collector (1a) according to claim 6, wherein two stress regions (15) are spaced in the coating region (14) in the second direction (Y), and the two stress regions (15) are respectively in adjacent connection with two opposite edges of the coating region (14) in the second direction (Y).

10. The current collector (1a) according to any one of claims 5 to 9, wherein the current collecting body (11) is further provided with a blank region (16), and the blank region (16) is located on at least one side of the coating region (14) in the second direction (Y), the first direction (X) being perpendicular to the second direction (Y).

11. The current collector (1a) according to any one of claims 1 to 10, wherein in the corner region (13) provided with the through holes (12), a sum of opening areas of all the through holes (12) is less than an area of the corner region (13) in the current collecting body (11).

12. The current collector (1a) according to claim 11, wherein in the corner region (13) provided with the through holes (12), the sum of the opening areas of all the through holes (12) is denoted as S1, and the area of the corner region (13) in the current collecting body (11) is denoted as S2, wherein 0.1% ≤ S1/S2 ≤ 50%.

13. The current collector (1a) according to any one of claims 1 to 12, wherein first n corner regions (13) are all provided with the through holes (12) from a winding starting end of the current collecting body (11), wherein n ≤ 6.

14. An electrode plate (1), comprising:
the current collector (1a) according to any one of claims 1 to 13; and
an active material layer arranged on at least one surface of the current collecting body (11).

15. The electrode plate (1) according to claim 14, wherein two active material layers are provided, and the two active material layers are respectively provided on two surfaces of the current collecting body (11).

16. A method for preparing an electrode plate, which is used to prepare the electrode plate (1) according to claim 14 or 15, and comprises the following steps:
providing a current collecting body (11);
providing through holes (12) in each corner region (13) of the current collecting body (11) to form a current collector (1a);
coating a surface of the current collector (1a) with an active material layer; and
rolling the coated current collector (1a).

17. The method for preparing an electrode plate according to claim 16, wherein the step of rolling the coated current collector (1a) comprises:
pressing a tension roller surface (220) of a pressure roller (200) and extension roller surfaces (210) located on two sides of the tension roller surface (220) respectively on the active material layer and blank regions (16) of the current collector (1a) that are located on two sides of the active material layer, and controlling a distance to be reserved between a side of the extension roller surface (210) facing the tension roller surface (220) and a region where the through holes (12) are located.

18. An electrode assembly (10) configured as a wound structure, comprising a positive electrode plate (2), a negative electrode plate (3), and a separator (4) spaced between the positive electrode plate (2) and the negative electrode plate (3), the wound structure comprising a bent portion (6), wherein
the positive electrode plate (2) and/or the negative electrode plate (3) are/is the electrode plate(s) (1) according to claim 14 or 15, and the bent portion (6) is opposite to a corner region (13) in position after winding.

19. A secondary battery (100), comprising the electrode assembly (10) according to claim 18.

20. An electric apparatus, comprising the second battery (100) according to claim 19.

Statement under Art. 19.1 PCT
The applicant requests to amend the claims in accordance with Article 19(1) of the PCT Treaty, substituting the original claims 1 to 16 with new claims 1 to 20.

The modifications are based on the originally submitted application and do not extend beyond the scope. Enclosed are the amendment explanation letter and the claim replacement sheet. Please continue the examination based on the amended text.

If there are any questions, please call the number 0731-82816688 extension 808, or contact via the email: bjvip16@aciplaw.com.
